# EUROPEAN PATENT SPECIFICATION

(11) **EP 2 238 211 B1**
(45) Date of publication and mention of the grant of the patent: **03.08.2011**
(21) Application number: 09705267.4
(22) Date of filing: 27.01.2009
(51) Int. Cl.: C09J 7/00

(54) **A LABEL AND A METHOD FOR ATTACHING THE LABEL TO AN ITEM**
ETIKETT UND VERFAHREN ZUR ANBRINGUNG DIESES ETIKETTS AN EINEM ELEMENT
ETIQUETTE ET PROCÉDÉ POUR ATTACHER L'ÉTIQUETTE À UN OBJET

(30) Priority: 28.01.2008 US 6696 P
(43) Date of publication of application: 13.10.2010
(73) Proprietor: UPM Raflatac Oy, 33310 Tampere (FI)
(72) Inventor: MITCHELL, Noel, 42111 Wuppertal (DE)
(74) Representative: Pursiainen, Timo Pekka
(86) International application number: PCT/FI2009/050067
(87) International publication number: WO 2009/095534

(56) References cited:
- EP-A- 1 834 799
- DE-A1- 4 222 832
- DE-A1- 4 242 687
- DE-A1-102005 061 125
- US-A- 3 914 484
- US-A- 6 074 747

## Description

### Field of the Invention

The present invention relates to a label comprising a substrate having a face side and a rear side, and an adhesive layer arranged on the rear side of the substrate, the adhesive layer being non-tacky but activatable to become tacky. The invention also relates to a method for attaching the label to an item.

### Background of the Invention

A number of known label decoration technologies are available and each of them possesses various advantages and disadvantages.

Self-adhesive or pressure-sensitive labels are well-known and widely used in the industry. They suffer, however, from a number of disadvantages which include the fact that the production process is rather complex. Firstly a release liner is coated on one side with a release agent, typically silicone, and then on top of this cured silicone layer, a layer of pressure-sensitive tacky adhesive is applied which remains tacky for an unlimited time throughout the lifetime of the product. A paper or filmic print-carrier is then laminated to the adhesive coated release liner, at which point the adhesive is preferably transferred to the print carrier. Rolls of such a pressure-sensitive laminate are then supplied for printing the face side and die-cutting the labels to the required shape and finally removing the waste matrix of the face side. The labels are then ready to be applied to the item to be labelled, and at this point the removable liner becomes a waste product which is a major disposal issue for users of such labels and the industry at large as well as the whole environment.

Another known alternative is the use of wet-glue labels in which pre-printed and die-cut paper labels are coated with a wet adhesive and applied to the substrate. Typically, such wet-glue label operations are very messy with a large amount of time being lost for clean-up, set-up and changing of label formats. In addition, such wet-glue labels almost always exhibit the unattractive gripper marks of the "label-box" on the finished labelled object (the label-box is a device which holds the paper labels prior to the application of the adhesive and their application to a surface). Furthermore, wet-glue labels are not available with clear films due to the technical problem that the water cannot evaporate and escape from such labels in a completely satisfactory manner resulting in unattractive bubbles in the label.

Another decoration technology is that of shrink-sleeves, in which case the total applied cost is very high and the production process is complex. Shrink-sleeve films are normally printed on wide-web gravure or flexographic presses with solvent-based inks, which could be an environmental and safety hazard. In a separate offline process after printing, the film is formed into a tube and the seams are adhered together by the use of a solvent welding process. This tube is then cut into shorter lengths and dropped over the article to be labelled which is then fed through a shrink-tunnel at high temperature causing the film to shrink and fit the shape of the container. Although this technology has produced a number of eye-catching and appealing results for some target market segments, it has a number of disadvantages. These include the fact that by definition, a shrink-sleeve covers the whole surface of the object to be labelled, and therefore 180° decoration or a label covering only part of the container surface is not possible. The visibility of unattractive seams on shrink-sleeve labels is also a negative issue. It is not possible to use shrink-sleeves for containers with flat sides or with containers with handles. It is not possible to use paper labels with shrink-sleeves; nor is it possible to have a variety of textures or tactile effects. It is also not possible to have spot labels, multiple labels on a container or unique label shapes when using shrink-sleeves. Neither is it possible to achieve the so-called "no-label" look with shrink-sleeves, that is, it is not possible to have the label blend with the container colour and material as if the label was not there and that the container was pre-printed.

Another widely-used label technology is that of wrap-around labels. Wrap-around labels can be produced from either paper or film and can be fed from stationary magazines or directly from reels. Typically, a hot-melt adhesive is applied to the leading edge of the label which is tightly wrapped around the container being rotated at a controlled speed, with the trailing edge being fixed in place by a second narrow strip of hot-melt adhesive. The major markets for such labels are soft drinks and mineral waters due to the lack of premium look and therefore the marketing appeal of the labels. It is not possible in this case to achieve the "no-label" look. The choice of materials is very limited and design variety is restricted to that of simple cylindrical shapes.

Publication US 2007/0014985 discloses compositions having a structured morphology. When triggered or activated by a suitable action, the morphology changes, causing a corresponding predetermined change in the property of the composition. Examples range from non-tacky to tacky, from uncured to cured, including change in colour, change in intensity of presence of fragrance, odour or smell, ranging from non-reactive to reactive and from stable to non-stable. The publication also discloses non-tacky films which become tacky in consequence of heating. Such activation by heating thus results in change of the tackiness of the film, but this tackiness is preserved upon cooling and the end result is similar to a pressure sensitive adhesive that remains tacky for an unlimited time.

### Summary of the Invention

It is an aim of the invention to provide a novel label that eliminates the above-mentioned drawbacks of the labels. In detail, the label according to the invention, among other things, does not require a release liner, which not only saves vital resources and manufacturing complexity but also avoids the major drawback of pressure-sensitive labels which is the disposal of the release liner after the application of the labels. In this case, there is no release liner to dispose of, nor is there any silicone involved or applied to the facestock in order to prevent blocking in the rolls, which could interfere with the subsequent printability of the facestock.

The aim of the present invention is also to provide a label which makes possible a firm joint between the label and the surface which the label has been attached.

Further advantages which relate to a novel label according to the invention are:
- It is possible to label very sensitive materials that do not tolerate hot adhesives even for a short time,
- labelling machines become simpler because the activation section of the adhesive may be placed further away from the section where the label is attached to a surface, and
- manual labelling is also possible because labels may cool down before the attachment of the labels.

To achieve the above-mentioned aims and advantages, the label according to the invention comprising a substrate having a face side and a rear side, and an adhesive layer arranged on the rear side of the substrate, the adhesive layer being non-tacky but activatable to become tacky, is characterized in that the adhesive layer comprises a polyurethane composition which is reversibly changeable from the non-tacky state to the tacky state.

In the labels according to the invention, the temporal tackiness period of the adhesive is not directly linked with the duration of the activation period. For example, if the activation from non-tacky to tacky is performed with heating, the tackiness is preserved a certain time also outside the cooling period. In other words, the already cooled down adhesive maintains its tackiness over a certain period of time after the temperature has equalized with the ambient temperature. According to one embodiment of the invention, the adhesive coating may remain tacky for up to 15 minutes which is more than adequate for it to be applied to a target item after activation.

The adhesive layer of the label can be altered from tacky to non-tacky, i.e. after the attachment of the label the adhesive changes to a non-tacky state. This happens after the label has been attached to a surface, and thus a firm joint is formed and it would be difficult to remove the label from its place.

A characteristic feature of the adhesive is that it is non-tacky at room temperature. The adhesive becomes tacky when it is activated by external energy and becomes non-tacky after a certain period of time after the external energy source has been removed. Thus, following the above-mentioned principle, the adhesive becomes tacky when it is heated and it becomes non-tacky after a certain period after cooling. However, the adhesive can be re-heated to become tacky again. Therefore, the polymer composition is reversibly changeable from the non-tacky state to the tacky state. By the mechanism of the adhesive, the non-tacky highly crystalline polymer melts when heated and changes to a largely amorphous tacky state.

Compared to the pressure-sensitive adhesives, the present adhesive has, for example, better bond strength, water resistance, solvent and heat resistance.

The label according to the invention comprises a substrate and an adhesive layer. The substrate has a face side and a rear side. The adhesive layer is situated on the rear side of the substrate. However, it is possible that this particular adhesive layer is not the closest layer of the rear side of the substrate but other layers may exist between the rear side of the substrate and the adhesive layer. The substrate may consist of one layer, or it may comprise several layers which may be, for example, co-extruded or laminated layers. The substrate may be made of paper or plastic or a combination of them. The plastic layer comprises polymers or co-polymers, such as polyester, polyolefin, polystyrene, polyurethane, polylactic acid, cyclic olefin copolymer, polyamide or combinations of these. The face side may serve as a printing substrate but it is also possible that the face side remains unprinted. The face side may also be treated so that the surface properties become more suitable for printing. The substrate may be a plastic film which may be clear or opaque. Also "no label" look labels can be manufactured. It is possible that the substrate or at least one layer of the substrate is metallised, coloured, or textured.

The adhesive of the adhesive layer is non-tacky in its initial state, i.e. the label may be manufactured without a release liner. However, the adhesive of the adhesive layer is activatable so that it becomes tacky when external energy is exerted on the adhesive layer. The adhesive comprises a polyurethane composition which is reversibly changeable from the non-tacky state to the tacky state. The adhesive may also comprise other polymers in addition to the polyurethane composition. The adhesive may include polymers, such as acrylic polymers, polyvinyl alcohol, ethylene/vinyl acetate copolymers or styrene/acrylate copolymers. The adhesive may also comprise inert fillers, tackifiers and/or plasticizers together with the polymer composition, such as the polyurethane composition. The external energy may comprise, for example, heat, infra-red radiation, microwaves, laser, or some other external energy which is capable of activating the adhesive layer. As one possibility, the adhesive layer is activated by heating it to a temperature between 50 to 90°C.

The face side of the label may be printed by any type of printing process, such as UV-flexo, UV-letterpress, water-based-flexo, gravure, offset, litho, screenprocess, thermal-transfer, direct-thermal hot- or cold-foil stamping. After printing, the labels may be die-cut and supplied to the application point in pre-cut form in any shape or design-format required. Alternatively, the labels may be supplied in rolls to the application point, where they could be die-cut, for example, using laser and transferred to a vacuum drum, of the type typically used for wrap-around labels, where the non-tacky dry coating on the reverse side of the facestock would be activated by heat, IR radiation or another energy source to produce a coating with sufficient "hot-tack" in order for it to be applied to the container and remain firmly in place during or after cooling.

The invention also relates to a method for attaching the label according to the invention to an item. The method is characterized in that the method comprises at least the steps of:
- activating the non-tacky adhesive layer of the label to become tacky, and
- attaching the label to the item so that the tacky adhesive layer comes in contact with the surface of the item.

The label of the invention may be attached to any type of item, container or surface which may be made of, for example, plastic, glass, metal, or cardboard.

### Description of the Drawings

In the following, the invention will be explained by an example and by referring to the appended drawings, in which
- Fig. 1: shows raw materials for the production of polyurethane dispersions,
- Fig. 2: shows the stabilization of dispersion particles by hydrate shells which are formed due to anionic groups,
- Fig. 3: shows the preparation of polyurethane dispersions by using the acetone process,
- Fig. 4: shows the preparation of polyurethane dispersions by using the melt dispersion process,
- Fig. 5: shows the drying and film formation of a polymer dispersion, and
- Fig. 6: shows the heat activation of polyurethane adhesives with crystalline polyester soft segments measured by TMA.

### Detailed Description of the Invention

In the following, the invention will be explained in more detail.

### Preparation of the adhesive layer

In the following, one possibility to prepare an adhesive for an adhesive layer will be explained.

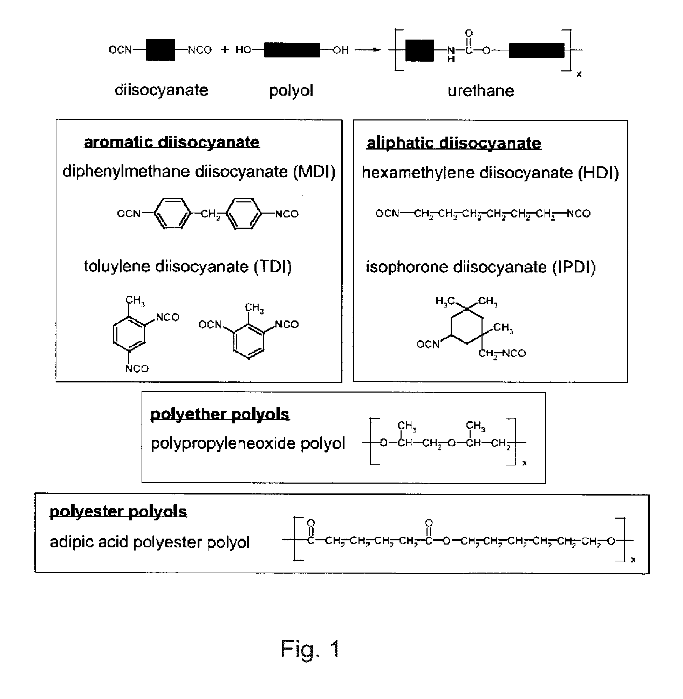

Polyurethane adhesives are generally produced by reacting long-chain polyols with aromatic or aliphatic isocyanates using the diisocyanate polyaddition process. Among the polyurethane heat-activatable adhesives, the polymer backbone is primarily based on crystalline polyester polyols, but amorphous polyester polyols have also been used for the production of heat-activatable adhesives (see Fig. 1 which shows raw materials for the production of polyurethane dispersions).

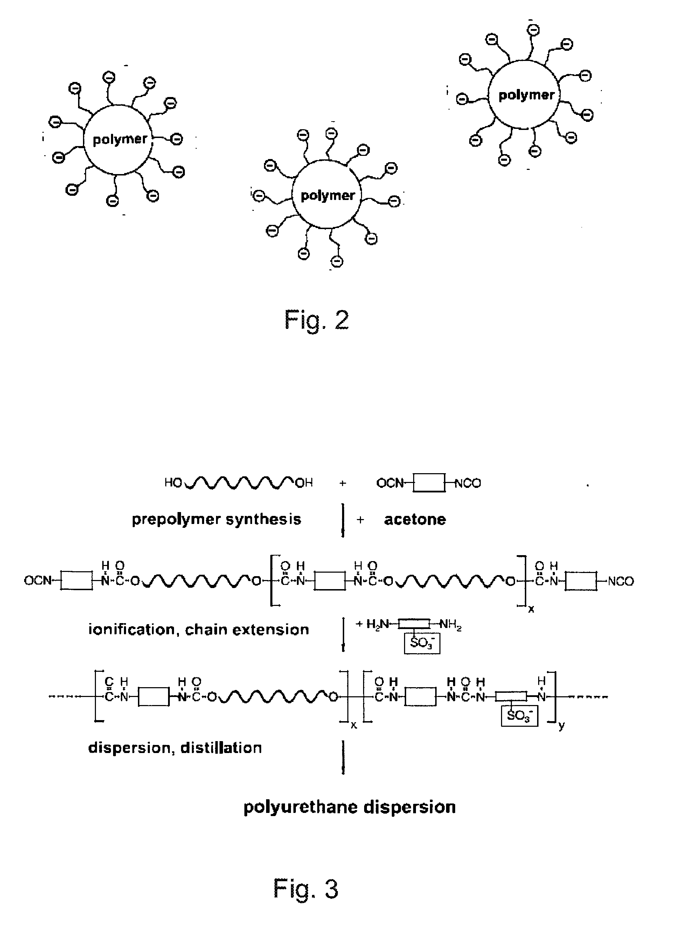

In the production of polyurethane dispersions by the acetone process or the melt-dispersion process, use is made of emulsifiers integrated in the polymer chain. Hydrophilic modification can be carried out through the covalent integration of ionic groups in the polymer chain, or through long polyether units at the ends of the chains. The dispersion particles are then surrounded by a stabilizing hydrate shell, with ionic and non-ionic hydrophilic groups generally acting synergistically (see Fig. 2).

Compared with the use of external emulsifiers, the incorporation of hydrophilic centers brings a number of advantages, such as self-dispersibility, high dispersion stability and good film-forming properties. Added to this is the fact that the covalent link prevents any diffusion of the emulsifier to the polymer surface.

With the acetone process (illustrated in Fig. 3), the first reaction stage - the so-called prepolymer-forming reaction - involves reacting the diisocyanate with the polyol in the melt to form a prepolymer terminated with isocyanate groups. In the second reaction stage - the chain extension reaction - after the addition of acetone, the molecular weight increases further through the addition of suitable chain extenders carrying ionic groups. Through the addition of water to the acetone solution, a fine dispersion is formed and, at the last stage, the acetone is distilled off. Because of the homogeneous structure of the polymer, the acetone process produces particularly high-quality dispersions.

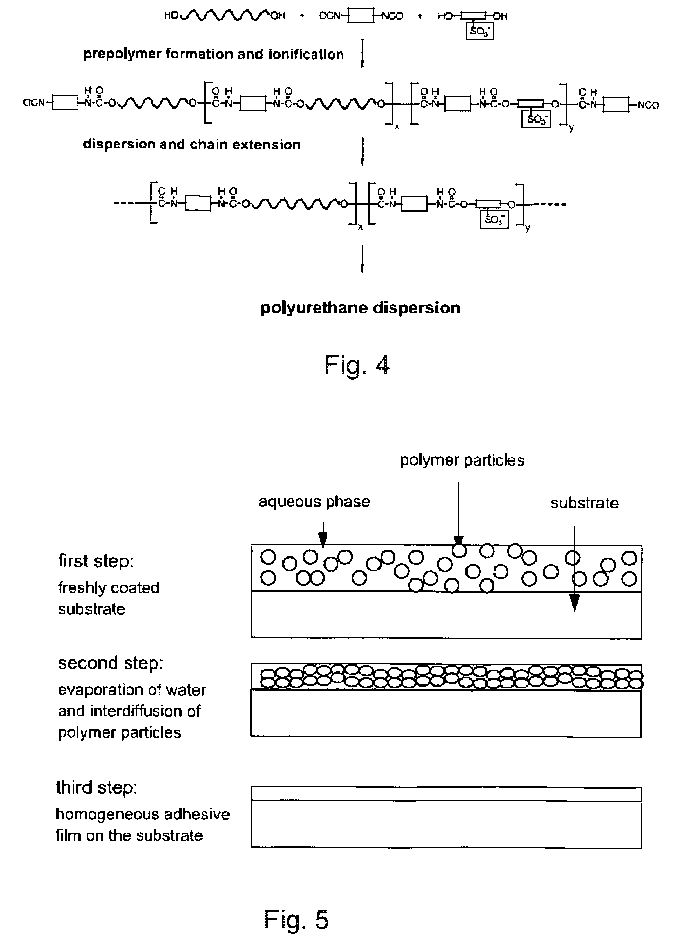

The melt dispersion process (illustrated in Fig. 4) has become established as a simpler alternative production procedure. In the prepolymer-forming reaction, the polyols are reacted with the diisocyanates to form an isocyanate-terminated prepolymer. Following dispersion in water, during which a fine dispersion forms spontaneously due to the internal hydrophilic character of the prepolymer, a high molecular weight polyurethane is produced by means of a short-chain diamine in the chain extension reaction. Both processes result in dispersions with good storage life and solids contents of 40 to 50 % by weight, in which the polymer is present in discrete particles of 100 to 200 nm diameter. Unlike solvent-based systems, this means that low application viscosities can also be achieved with high solids contents, and it is even possible to produce branched or crosslinked polyurethanes.

The dispersion produces a homogeneous adhesive film on the substrate after the water has evaporated (see Fig. 5). Although the drying process with adhesive dispersions is initially regarded as a rather problematic procedure, it is possible, with the correct choice of temperature, to achieve a drying rate for waterborne adhesives similar to that of solvent based systems.

### Drying and bonding of the adhesive

In the following, the drying and bonding behaviour of the adhesive described above will be explained.

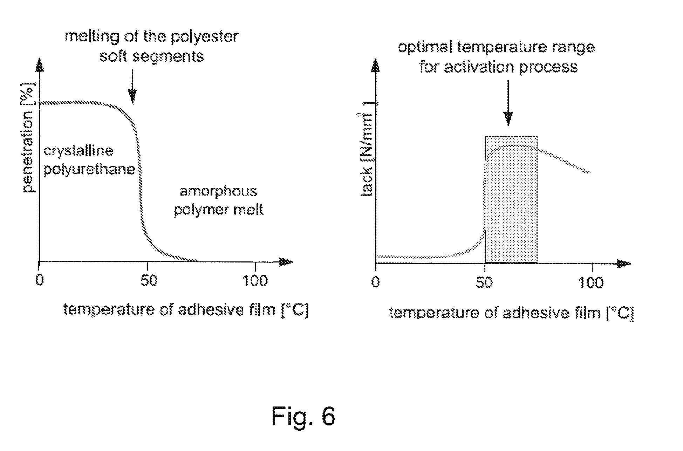

An important bonding process with polyurethane adhesives, both solvent-based and dispersion-based, is by heat activation. After applying the adhesive to the substrate, non-blocking films are obtained. The films only become tacky upon activation in a heat tunnel or under an infrared lamp through melting of the crystalline polyester segments at temperatures above the minimum activation temperature (see Fig. 6). The period of time during which the polymer film has sufficient tackiness for bonding is called the hot-tack life. During this time, which can range from seconds to minutes depending on the polymer structure, the substrates can be joined. It should be noted that the hot-tack life is not directly related to the temperature of the adhesive. The hot-tack period, the period when the adhesive is tacky, may extend beyond the period after which the adhesive has reached ambient temperature.

Through cooling of the adhesive film and crystallization of the polyester segments, a high initial bond strength is obtained.

Another characteristic of heat-activatable polyurethane adhesives is that, because of their high molecular weight and segmented polymer structure, the heat stability is higher than the decrystallization temperature of the polyester segments. This means that the adhesives only begin to slow down the thermoplastic flow to a considerable extent at temperatures significantly higher than the minimum activation temperature.

### Use of the labelstock according to the invention

A labelstock according to the invention was manufactured. The reverse side of the facestock was coated with the polyurethane coating described above. The coating was dried at an elevated temperature. After drying, the coating was completely tack-free and non-sticky and, therefore, in comparison to pressure-sensitive labelstock, it did not require a release liner.

After coating and drying of the polyurethane coating on the facestock, the labelstock was wound into reels and then supplied to printers for further processing.

The facestock may be printed with any type of printing process such as UV-flexo, UV-letterpress, water-based-flexo, gravure, offset, litho, screenprocess, thermal-transfer, direct-thermal hot- or cold-foil stamping.

After printing, the labels may be die-cut, for example, by using laser and supplied to the application point in pre-cut form in any shape or design-format required. Alternatively, the labels may be supplied in rolls to the application point, where they could be die-cut using laser and transferred to a vacuum drum, of the type typically used for wrap-around labels, where the non-tacky dry coating on the reverse side of the facestock would be activated by heat, IR radiation or another energy source to produce a coating with sufficient "hot-tack" in order for it to be applied to the container and remain firmly in place whilst cooling. Typically, the polyurethane coating could by activated by heating it to a temperature between 50 and 90°C for only a few seconds.

However, even due to the short heating period, the coating will typically remain tacky for up to 15 minutes which is more than adequate for it be applied to the container after activation. After that, the coating is no longer tacky and forms a permanent bond to the container and displays good heat-resistance. Using this technique, any paper or filmic facestock may be chosen together with any label shape and printed by any known printing process. Clear labels with a "no-label" look can also be achieved.

## Claims

1. A release linerless adhesive label comprising a substrate having a face side and a rear side, and an adhesive layer arranged on the rear side of the substrate, the adhesive layer being non-tacky but activatable to become tacky adhesive, **characterized in that** the adhesive layer comprises a segmented polyurethane polymer composition which is reversibly changeable from the non-tacky state to the tacky adhesive state.

2. The release linerless adhesive label according to claim 1, **characterized in that** the adhesive layer comprises a composition which is activatable to become tacky by heat, infra-red radiation, microwaves, laser, or a combination of at least two of the above-mentioned means.

3. The release linerless adhesive label according to claim 1 or 2, **characterized in that** the adhesive layer comprises acrylic polymers, polyvinyl alcohol, ethylene/vinyl acetate copolymers, or styrene/acrylate copolymers.

4. The release linerless adhesive label according to any of the preceding claim, **characterized in that** the adhesive layer comprises filler, tackifier, plasticizer or combinations of these.

5. The release linerless adhesive label according to any of the preceding claim, **characterized in that** the substrate comprises at least two layers.

6. The release linerless adhesive label according to any of the preceding claim, **characterized in that** the substrate is made of paper, plastic or a combination of them.

7. A method for attaching the release linerless adhesive label according to any of the preceding claim to an item, the method comprising at least the steps of:
- activating the non-tacky adhesive layer of the label to became tacky, and
- attaching the label to the item so that the tacky adhesive layer comes in contact with the surface of the item.

8. The method according to the claim 7, **characterized in that** the adhesive layer is activated by heat, infra-red radiation, microwaves, laser, or a combination of at least two of the above-mentioned means.

9. The method according to the claim 8, **characterized in that** the adhesive layer is activated to a temperature between 50 to 90 °C.

10. The method according to any of the preceding claim 7 to 9, **characterized in that** the item is made of plastic, glass, metal or cardboard.

## Patentansprüche

1. Ablösbares, trennschichtloses Haftetikett umfassend ein Substrat mit einer Vorderseite und einer Rückseite sowie eine auf der Rückseite des Substrats angeordnete Haftschicht, wobei die Haftschicht nichtklebrig ist, aber derart aktivierbar ist, dass sie haftklebrig wird, **dadurch gekennzeichnet, dass** die Haftschicht eine segmentierte Polyurethanpolymer-Zusammensetzung umfasst, die umkehrbar vom nichtklebrigen Zustand zum haftklebrigen Zustand veränderbar ist.

2. Ablösbares, trennschichtloses Haftetikett nach Anspruch 1, **dadurch gekennzeichnet, dass** die Haftschicht eine Zusammensetzung umfasst, die derart aktivierbar ist, dass sie durch Wärme, Infrarotstrahlung, Mikrowellen, Laser oder eine Kombination von mindestens zwei der oben genannten Mittel klebrig wird.

3. Ablösbares, trennschichtloses Haftetikett nach Anspruch 1 oder 2, **dadurch gekennzeichnet, dass** die Haftschicht Acrylpolymere, Polyvinylalkohol, Ethylen/Vinylacetat-Copolymere oder Styrol/AcrylatCopolymere umfasst.

4. Ablösbares, trennschichtloses Haftetikett nach irgendeinem der vorangehenden Ansprüche, **dadurch gekennzeichnet, dass** die Haftschicht einen Füllstoff, Klebrigmacher, Weichmacher oder Kombinationen dieser umfasst.

5. Ablösbares, trennschichtloses Haftetikett nach irgendeinem der vorangehenden Ansprüche, **dadurch gekennzeichnet, dass** das Substrat mindestens zwei Schichten umfasst.

6. Ablösbares, trennschichtloses Haftetikett nach irgendeinem der vorangehenden Ansprüche, **dadurch gekennzeichnet, dass** das Substrat aus Papier, Kunststoff oder einer Kombination davon besteht.

7. Verfahren zum Anbringen des ablösbaren, trennschichtlosen Haftetiketts nach irgendeinem der vorangehenden Ansprüche an einem Artikel, wobei das Verfahren mindestens folgende Schritte umfasst:
- Aktivieren der nichtklebrigen Haftschicht des Etiketts derart, dass sie klebrig wird, und
- Anbringen des Etiketts am Artikel derart, dass die klebrige Haftschicht in Kontakt mit der Oberfläche des Artikels kommt.

8. Verfahren nach Anspruch 7, **dadurch gekennzeichnet, dass** die Haftschicht durch Wärme, Infrarotstrahlung, Mikrowellen, Laser oder eine Kombination von mindestens zwei der oben genannten Mittel aktiviert wird.

9. Verfahren nach Anspruch 8, **dadurch gekennzeichnet, dass** die Haftschicht durch eine Temperatur zwischen 50 und 90 °C aktiviert wird.

10. Verfahren nach irgendeinem der vorangehenden Ansprüche 7 bis 9, **dadurch gekennzeichnet, dass** der Artikel aus Kunststoff, Glas, Metall oder Karton besteht.

## Revendications

1. Étiquette adhésive sans papier dorsal à recollage multiple comprenant un substrat ayant un côté de face et un côté de dos, et une couche adhésive agencée sur le côté de dos du substrat, la couche adhésive étant non poisseuse mais activable pour devenir adhésive poisseuse, **caractérisée en ce que** la couche adhésive comprend une composition de polymère de polyuréthane segmenté qui peut être changée de façon réversible de l'état adhésif non poisseux à l'état adhésif poisseux.

2. Étiquette adhésive sans papier dorsal à recollage multiple selon la revendication 1, **caractérisée en ce que** la couche adhésive comprend une composition qui est activable pour devenir poisseuse par la chaleur, un rayonnement infrarouge, des micro-ondes, un laser, ou une combinaison d'au moins deux des moyens mentionnés ci-dessus.

3. Étiquette adhésive sans papier dorsal à recollage multiple selon la revendication 1 ou 2, **caractérisée en ce que** la couche adhésive comprend des polymères acryliques, un poly(alcool vinylique), des copolymères d'éthylène/acétate de vinyle, ou des copolymères de styrène/acrylate.

4. Étiquette adhésive sans papier dorsal à recollage multiple selon l'une quelconque des revendications précédentes, **caractérisée en ce que** la couche adhésive comprend une charge, un agent poisseux, un plastifiant ou des combinaisons de ceux-ci.

5. Étiquette adhésive sans papier dorsal à recollage multiple selon l'une quelconque des revendications précédentes, **caractérisée en ce que** le substrat comprend au moins deux couches.

6. Étiquette adhésive sans papier dorsal à recollage multiple selon l'une quelconque des revendications précédentes, **caractérisée en ce que** le substrat est constitué de papier, de plastique ou d'une combinaison de ceux-ci.

7. Procédé de fixation d'une étiquette adhésive sans papier dorsal à recollage multiple selon l'une quelconque des revendications précédentes sur un article, le procédé comprenant au moins les étapes de :
- activation de la couche adhésive non poisseuse de l'étiquette pour qu'elle devienne poisseuse, et
- fixation de l'étiquette sur l'article de telle façon que la couche adhésive poisseuse vient en contact avec la surface de l'article.

8. Procédé selon la revendication 7, **caractérisé en ce que** la couche adhésive est activée par la chaleur, un rayonnement infrarouge, des micro-ondes, un laser, ou une combinaison d'au moins deux des moyens mentionnés ci-dessus.

9. Procédé selon la revendication 8, **caractérisé en ce que** la couche adhésive est activée à une température entre 50 à 90°C.

10. Procédé selon l'une quelconque des revendications précédentes 7 à 9, **caractérisé en ce que** l'article est constitué de plastique, de verre, de métal ou de carton.
